# EUROPÄISCHE PATENTSCHRIFT

(11) **EP 2 041 446 B1**
(45) Veröffentlichungstag und Bekanntmachung des Hinweises auf die Patenterteilung: **22.12.2010**
(21) Anmeldenummer: 07729423.9
(22) Anmeldetag: 23.05.2007
(51) Int. Cl.: F16D 65/14

(54) **ELEKTROMECHANISCH SCHALTBARER, FORMSCHLÜSSIGER FREILAUF, ELEKTROMECHANISCHE BREMSE FÜR EIN KRAFTFAHRZEUG MIT EINEM SOLCHEN FREILAUF UND VERFAHREN ZUR LÜFTSPIELEINSTELLUNG EINER SOLCHEN BREMSE**
POSITIVE-FIT FREEWHEEL MECHANISM THAT CAN BE ELECTROMECHANICALLY ACTUATED, ELECTROMECHANICAL BRAKE WITH A FREEWHEEL MECHANISM OF THIS TYPE FOR A MOTOR VEHICLE AND METHOD FOR ADJUSTING THE PLAY IN A BRAKE OF THIS TYPE
ROUE LIBRE À COMPLÉMENTARITÉ DE FORME À COMMANDE ÉLECTROMÉCANIQUE, FREIN ÉLECTROMÉCANIQUE DE VÉHICULE AUTOMOBILE POURVU D'UNE ROUE LIBRE DE CE TYPE ET PROCÉDÉ DE RÉGLAGE DU JEU D'UN FREIN DE CE TYPE

(30) Priorität: 07.07.2006 DE 102006031508
(43) Veröffentlichungstag der Anmeldung: 01.04.2009
(73) Patentinhaber: Robert Bosch GmbH, 70442 Stuttgart (DE)
(72) Erfinder: CAO, Chi-Thuan, 70825 Korntal-Muenchingen (DE); HOFMANN, Dirk, 70439 Stuttgart (DE); VOLLERT, Herbert, 71665 Vaihingen/Enz (DE); NAGEL, Willi, 71686 Remseck/Hochdorf (DE); FOITZIK, Bertram, 74360 Ilsfeld (DE); GOETZELMANN, Bernd, 71063 Sindelfingen (DE)
(86) Internationale Anmeldenummer: PCT/EP2007/054985
(87) Internationale Veröffentlichungsnummer: WO 2008/003553

(56) Entgegenhaltungen:
- WO-A-2004/041608

## Beschreibung

### Stand der Technik

Die Erfindung betrifft einen elektromechanisch schaltbaren, formschlüssigen Freilauf mit den Merkmalen des Oberbegriffs des Anspruchs 1. Der Freilauf ist insbesondere zur Verwendung in einer elektromechanischen Bremse für ein Kraftfahrzeug vorgesehen, um die Bremse zu einer Feststellbremse (Parkbremse) weiter zu bilden. Des Weiteren betrifft die Erfindung eine solche elektromechanische Bremse für ein Kraftfahrzeug mit dem Freilauf gemäß dem Oberbegriff des Anspruchs 8 sowie ein Verfahren zur Einstellung des Lüftspiels einer Bremse.

Freiläufe sind an sich bekannt, sie werden auch als richtungsgeschaltete Kupplungen bezeichnet. Ein Freilauf sperrt ein Bauteil, beispielsweise eine Welle oder einen Käfig/ein Gehäuse gegen eine Drehung in einer Sperrrichtung und lässt eine Drehung des Bauteils in der entgegengesetzten Drehrichtung zu, die als Freilaufrichtung bezeichnet wird. Die Sperrung gegen Drehung in der Sperrrichtung kann auch gegenüber einem zweiten, drehbaren Bauteil erfolgen, also beispielsweise des Gehäuses/Käfigs gegenüber der Welle. Ein schaltbarer Freilauf ist ausschaltbar, in ausgeschaltetem Zustand ist er wirkungslos. In eingeschaltetem Zustand weist der Freilauf die geschilderte Sperrwirkung gegen Drehung in der Sperrrichtung auf.

Die DE 102 34 848 A1 offenbart eine elektromechanische Bremse mit einem elektromechanisch schaltbaren, formschlüssigen Freilauf. Mit dem Freilauf ist die Bremse in betätigtem Zustand feststellbar, die aufgebaute Bremskraft bleibt bei stromloser Bremse aufrechterhalten. Dadurch ist die bekannte Bremse, die zunächst eine Betriebsbremse ist, zu einer Betriebs- und Feststellbremse weitergebildet. Feststellbremsen werden auch als Parkbremsen bezeichnet.

Der Freilauf der bekannten Bremse weist einen Riegel auf, der radial zu einem Zahnrad angeordnet und radial zum Zahnrad verschiebbar ist. Der Riegel bildet ein Sperrelement des Freilaufs. Das Zahnrad weist eine sägezahnförmige Verzahnung auf, der Riegel weist eine Schrägfläche an seinem dem Zahnrad zugewandten Ende auf, die schrägen Flanken der Zähne des Zahnrads zugewandt ist. Zum Verschieben des Riegels weist der bekannte Freilauf einen Elektromagneten auf. Zum Einschalten des Freilaufs wird der Riegel in Eingriff mit den Zähnen des Zahnrads gebracht und sperrt an radialen Zahnflanken gegen eine Drehung des Zahnrads in einer Sperrrichtung. Bei entgegengesetzter Drehung des Zahnrads drücken die schrägen Zahnflanken den Riegel an dessen Schrägfläche außer Eingriff, so dass eine Drehung des Zahnrads in einer der Sperrrichtung entgegengesetzten Freilaufrichtung bei eingeschaltetem Freilauf möglich ist. Zum Ausschalten des Freilaufs wird der Riegel zurückgezogen, d. h. außer Eingriff von den Zähnen des Zahnrads gebracht.

Die bekannte Bremse weist eine elektromechanische Betätigungseinheit mit einem Elektromotor und einem Rollengewindetrieb zur Betätigung der Bremse auf, mit der ein Reibbremsbelag gegen einen drehbaren, zu bremsenden Bremskörper drückbar ist. Im Falle einer Scheibenbremse ist der Bremskörper eine Bremsscheibe, bei einer Trommelbremse ist der Bremskörper eine Bremstrommel. Der Rollengewindetrieb bildet ein Untersetzungsgetriebe und ein Rotations-/Translations-Umsetzungsgetriebe, das eine drehende Antriebsbewegung des Elektromotors in eine translatorische Bewegung zum Drücken des Reibbremsbelags gegen den Bremskörper bildet.

### Offenbarung der Erfindung

Der erfindungsgemäße Freilauf mit den Merkmalen des Anspruchs 1 weist einen Anker auf, der vergleichbar einem Rotor eines Elektromotors ausgebildet ist, dessen Schwenkwinkel allerdings begrenzt ist. Der Anker weist das Sperrelement auf, das durch Schwenken des Ankers in einer Richtung in Eingriff mit den Zähnen eines Zahnrads bringbar ist. In dieser eingeschalteten Stellung des Freilaufs sperrt das Sperrelement durch seinen formschlüssigen Eingriff mit den Zähnen des Zahnrads gegen dessen Drehung in der Sperrrichtung, da der Schwenkwinkel des Ankers begrenzt ist. In der anderen Drehrichtung, der Freilaufrichtung, drücken die Zähne des Zahnrads das Sperrelement außer Eingriff, das Zahnrad ist in der Freilaufrichtung drehbar. Zum Ausschalten des Freilaufs wird der Anker in der anderen Richtung geschwenkt, so dass das Sperrelement außer Eingriff vom Zahnrad ist. Das Zahnrad ist in beiden Richtungen drehbar. Vorzugsweise wird der Freilauf passiv ausgeschaltet durch Drehung des Zahnrads in der Freilaufrichtung, dabei drücken die Zähne des Zahnrads das Sperrelement außer Eingriff und in die ausgeschaltete Stellung. Der Elektromagnet ist dabei unbestromt.

Der Elektromagnet des erfindungsgemäßen Freilaufs weist ein Joch auf, das nach Art eines Stators eines Elektromotors ausgebildet ist und den Anker umgreift. Durch Bestromen des Elektromagneten wird ein Moment auf den Anker ausgeübt, das das Sperrelement in Eingriff mit oder außer Eingriff von dem Zahnrad bringt, d. h. den Freilauf ein- oder ausschaltet. Der Elektromotor und der Anker können so ausgebildet sein, dass durch Umkehrung der Bestromung des Elektromagneten der Freilauf mit dem Elektromagneten ein- und ausschaltbar ist. Eine Umkehrung der Wirkungsrichtung des Elektromagneten ist beispielsweise in Zusammenwirken des Elektromagneten mit einem Permanentmagneten möglich. Auch sind Ausgestaltungen möglich, bei denen der Elektromagnet den Freilauf entweder ein- oder ausschaltet. Die entgegengesetzte Schaltbewegung erfolgt beispielsweise mittels eines Federelements.

Durch seine formschlüssige Ausbildung hat der erfindungsgemäße Freilauf im Vergleich mit einem kraftschlüssigen sog. Klemmfreilauf den Vorteil, dass er sich nicht unbeabsichtigt aus dem eingeschalteten Sperrzustand löst. Bei einem Klemmfreilauf ist ein ungewolltes Lösen durch Gleitvorgänge zwischen dem oder den Klemmkörpern, die die Sperrelemente bilden, und einem gegen Drehung in der Sperrrichtung zu sperrenden Bauteil denkbar. Das gilt insbesondere für den Fall, dass der Freilauf zur Einstellung eines Lüftspiels einer Bremse während einer Fahrt eingeschaltet und deswegen Schwingungen, Vibrationen und Stößen ausgesetzt ist. Auch eine Abkühlung kann bei unterschiedlichen thermischen Dehnungen zu einem Gleiten der Klemmkörper eines kraftschlüssigen Freilaufs führen, die den Freilauf lösen.

Weiterer Vorteil des erfindungsgemäßen Freilaufs ist dessen kompakte Bauform nach Art eines Elektromotors, allerdings mit begrenztem Schwenkwinkel des Ankers. Zusätzlicher Vorteil ist eine konstruktiv vergleichsweise einfache Ausführbarkeit mit nur dem das Sperrelement aufweisenden Anker als einzigem, bewegtem Bauteil. Dabei ist eine Dreh- oder Schwenklagerung als weniger störanfällig anzusehen als eine Schiebeführung beispielsweise des Riegels des bekannten, oben als Stand der Technik erläuterten Freilaufs.

Die Unteransprüche haben vorteilhafte Ausgestaltungen und Weiterbildungen der im Anspruch 1 angegebenen Erfindung zum Gegenstand.

Anspruch 2 sieht vor, dass der Anker mit dem Sperrelement ausgewuchtet ist. Beim Fahren auf den Freilauf einwirkende Beschleunigungen, die beispielsweise beim Überfahren eines Bordsteins etwa 60 - 80 g (60-80fache Erdbeschleunigung) betragen können, bewirken kein Moment auf den Anker. Dadurch wird ein unbeabsichtigtes Ein- oder Ausschalten des Freilaufs vermieden.

Gegenstand des nebengeordneten Anspruchs 8 ist eine elektromechanische Bremse, die mit dem erfindungsgemäßen Freilauf ausgestattet und dadurch zu einer Feststellbremse weitergebildet ist. Ihre Erläuterung ergibt sich aus den vorstehenden Ausführungen zum Stand der Technik und zum erfindungsgemäßen Freilauf.

Insbesondere greift das Sperrelement des Freilaufs an einem Zahnrad der elektromechanischen Betätigungseinheit der Bremse an (Anspruch 9). Der Freilauf wirkt dadurch mit einem ohnehin vorhandenen Zahnrad zusammen. Das Zahnrad kann Teil eines Getriebes der elektromechanischen Betätigungseinheit der Bremse sein. Insbesondere wird ein Ritzel einer Motorwelle eines Elektromotors der elektromechanischen Betätigungseinheit der Bremse als Zahnrad für den Freilauf genutzt. An der Motorwelle sind die Momente am niedrigsten, so dass auf den Freilauf niedrige Kräfte und Momente einwirken. Außerdem ist die Drehung der Motorwelle am größten, so dass eine feingestufte Sperrung der Bremse möglich ist.

Das Verfahren gemäß Anspruch 10 sieht vor, dass der erfindungsgemäße Freilauf beim Lösen der Bremse eingeschaltet wird. Dadurch wird ein Lüftspiel, d. h. ein Spalt zwischen einem Reibbremsbelag und einem Bremskörper eingestellt, der Freilauf sperrt gegen ein weiteres Öffnen der Bremse. Auf diese Weise ist eine Lüftspieleinstellung und damit eine Verschleißnachstellung möglich. Der Freilauf wird beispielsweise beim Abheben des Reibbremsbelags vom Bremskörper oder eine vorgegebene Strecke danach eingeschaltet. Vorzugsweise wird der Freilauf nur zum Einschalten bestromt und ist in der eingeschalteten Stellung unbestromt. Rückstellfedern der Bremse, die den Reibbremsbelag bei nicht betätigter Bremse vom Bremskörper abheben, bewirken eine Vorspannung, die den Freilauf in Eingriff mit dem Zahnrad der Betätigungseinrichtung der Bremse und damit eingeschaltet hält.

### Kurze Beschreibung der Zeichnungen

Die Erfindung wird nachfolgend anhand einer in der Zeichnung dargestellten Ausführungsform näher erläutert. Es zeigen:
- Figur 1: einen Freilauf gemäß der Erfindung in Stirnansicht; und
- Figur 2: eine Schemadarstellung einer erfindungsgemäßen Bremse mit dem Freilauf aus Figur 1.

### Ausführungsform der Erfindung

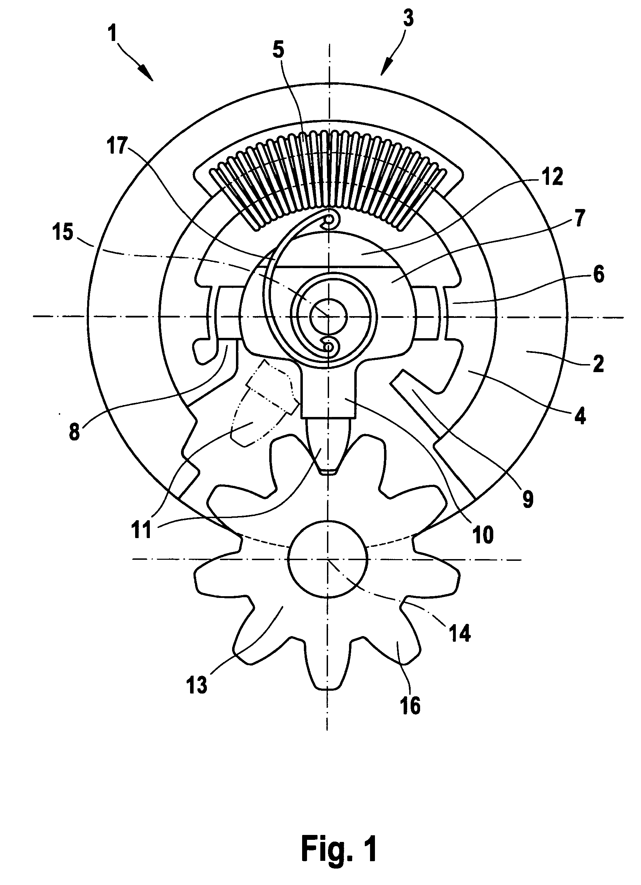

Der in Figur 1 dargestellte erfindungsgemäße Freilauf 1 ist elektromechanisch schaltbar und wirkt formschlüssig. Sein Aufbau ist einem Elektromotor vergleichbar. Der Freilauf 1 weist einen hohlzylindrisches Gehäuse 2 mit einem Elektromagneten 3 auf. Der Elektromagnet 3 umfasst ein ebenfalls hohlzylindrisches, auch als Stator zu bezeichnendes Joch 4, auf dem eine Spule 5 angeordnet ist. Das Joch 4 ist in das Gehäuse 2 gefügt, beispielsweise eingepresst. Das Joch 4 weist zwei einander gegenüberliegend angeordnete, radial nach innen stehende Polschuhe 6 auf.

Koaxial im Gehäuse 2 ist ein Anker 7 schwenkbar gelagert, dessen Drehwinkel durch zwei Anschläge 8, 9 begrenzt ist. Die Anschläge 8, 9 stehen vom Joch 4 nach innen. Vom Anker 7 steht radial ein Sperrelement 10 mit einem Zahn 11 ab. Das Sperrelement 10 ist einstückig mit dem Anker 7. Dem Sperrelement 10 gegenüber weist der Anker 7 einen Masseausgleich 12 auf, der Anker 7 ist ausgewuchtet.

Das Sperrelement 10 wirkt mit einem Zahnrad 13 zusammen, dessen gedachten Achse 14 parallel zu einer gedachten Achse 15 des Ankers 7 verläuft. Die Achse 14 des Zahnrads 13 befindet sich außerhalb des Gehäuses 2 des Freilaufs 1. Das Gehäuse 2 und das Joch 4 weisen eine Aussparung auf einem Abschnitt ihres Umfangs auf, der vom Zahnrad 13 mit einem Teil seines Umfangs durchgriffen wird.

Das Sperrelement 10 wirkt mit dem Zahnrad 13 zusammen. Durch Bestromen der Spule 5 des Elektromagneten 3 wird ein Moment auf den Anker 7 ausgeübt, das den Anker 7 in die in Figur 1 dargestellte Stellung schwenkt, in der der Anker 7 an einem der beiden seinen Schwenkwinkel begrenzenden Anschlag 8 anliegt. In dieser Stellung steht der Zahn 11 des Sperrelements 10 in Eingriff mit Zähnen 16 des Zahnrads 13. Da der Schwenkwinkel des Ankers 7 vom Anschlag 8 begrenzt ist, sperrt das Sperrelement 10 mit seinem Zahn 11 das Zahnrad 13 gegen eine Drehung in einer Richtung, der Sperrrichtung. In der entgegengesetzten Richtung, der Freilaufrichtung, drücken die Zähne 16 des Zahnrads 13 den Zahn 11 des Sperrelements 10 außer Eingriff, das Zahnrad 13 ist in der Freilaufrichtung drehbar. So lange der Elektromagnet 3 bestromt ist, wirkt ein Moment auf den Anker 7, das sein Sperrelement 10 in Eingriff mit den Zähnen 16 des Zahnrads 13 beaufschlagt. Der Freilauf 1 ist eingeschaltet.

Ein Rückstellfederelement 17, das am Anker 7 angreift, beaufschlagt den Anker 7 mit einem Moment, das dem Moment des Elektromagneten 3 entgegengerichtet ist. Bei abgeschaltetem Elektromagneten 3 schwenkt das Rückstellfederelement 17 den Anker 7 gegen den anderen Anschlag 9 und dabei das Sperrelement 10 mit dem Zahn 11 außer Eingriff von den Zähnen 16 des Zahnrads 13. Diese Stellung des Sperrelements 10 und seines Zahns 11 ist in Figur 1 mit Strich-Zweipunkt-Linien angedeutet. Der Freilauf 1 ist ausgeschaltet, das Zahnrad 13 ist in beiden Drehrichtungen drehbar. Das Rückstellfederelement 17 ist in der dargestellten Ausführungsform der Erfindung eine Spiralfeder.

In der dargestellten und beschriebenen Ausführungsform der Erfindung ist der Freilauf 1 monostabil, bei abgeschaltetem Elektromagneten 3 bewegt das Rückstellfederelement 17 den Freilauf 1 in die ausgeschaltete Stellung. Steht der Zahn 11 des Sperrelements 10 in Eingriff mit den Zähnen 16 des Zahnrads 13, halten die Zähne 16 des Zahnrads 13 den Zahn 11 des Sperrelements 10 auch bei abgeschaltetem Elektromagnet 3 gegen das Moment des Rückstellfederelements 17 in Eingriff, das Zahnrad 13 bleibt gegen Drehung in der Sperrrichtung gesperrt. Ausgeschaltet wird der Freilauf 1 erst durch eine kurze Schwenkung des Zahnrads 13 in Freilaufrichtung, durch die der Zahn 11 des Sperrelements 10 von den Zähnen 16 des Zahnrads 13 freikommt.

Grundsätzlich ist eine monostabile Ausbildung des Freilaufs 1 auch mit der ausgeschalteten Stellung als stabiler Stellung möglich (nicht dargestellt). Auch eine bistabile Ausbildung des Freilaufs 1 ist möglich, indem beispielsweise der eine Anschlag 8 und/oder der Anker 7 einen Permanentmagneten aufweist, der den Anker 7 in beiden Endstellungen in Anlage am jeweiligen Anschlag 8, 9 hält (nicht dargestellt). Auch mit einem Totpunktfederelement ist eine bistabile Ausbildung des Freilaufs 1 möglich. Das Totpunktfederelement beaufschlagt den Anker 7 nach Überwinden eines Totpunkts gegen den einen Anschlag 8, 9 und nach Überwinden des Totpunkts in entgegengesetzter Richtung gegen den anderen Anschlag 9, 8 (nicht dargestellt). Bei einer bistabilen Ausbildung des Freilaufs 1 wird der Elektromagnet 3 nur zum Umschalten bestromt, wobei die Bestromung zum Ein- und zum Ausschalten umgekehrt wird. Das Ein- und das Ausschalten des Freilaufs kann durch Umpolen der Bestromung des Elektromagneten erfolgen, wenn dieser mit einem Permanentmagneten zusammenwirkt (nicht dargestellt).

Der Zahn 11 des Sperrelements 10 ist wie der Zahn eines Zahnrads ausgebildet. Das Zahnrad 13 weist Zähne 16 mit symmetrischen Zahnflanken auf, es handelt sich um ein herkömmliches Zahnrad 13. Es ist keine Spezialverzahnung, beispielsweise keine sägezahnförmige Verzahnung des Zahnrads 13 des Freilaufs 1 notwendig. Der Zahn 11 des Sperrelements 10 und die Zähne 16 des Zahnrads 13 weisen wälzende Zahnflankenformen, insbesondere also die Form von Evolventen oder Zykloiden auf.

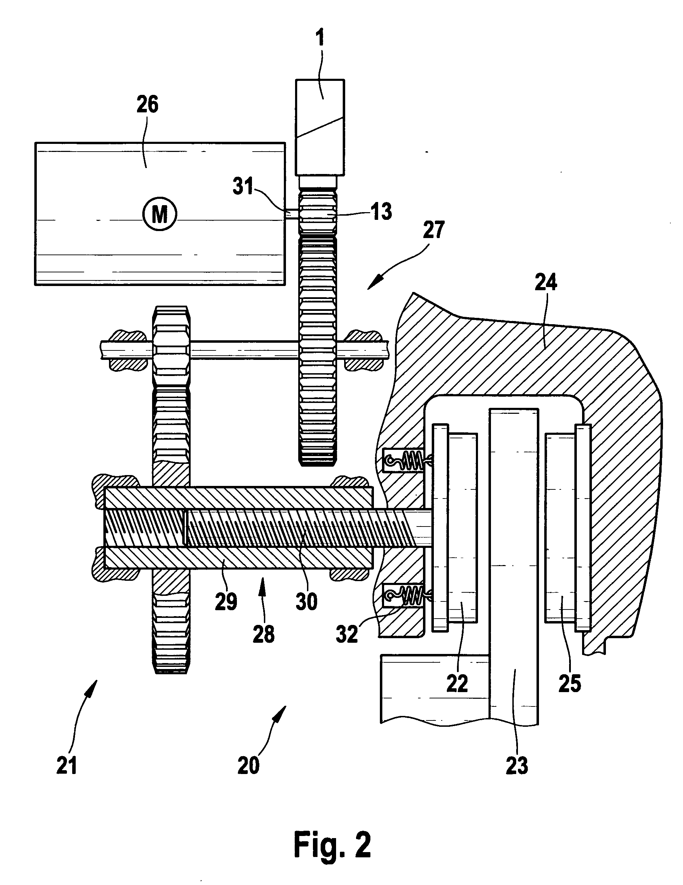

Die in Figur 2 schematisiert dargestellte erfindungsgemäße elektromechanische Bremse 20 weist eine elektromechanische Betätigungseinheit 21 auf, mit der ein Reibbremsbelag 22 zum Bremsen gegen eine Bremsscheibe 23 drückbar ist. Die Betätigungseinheit 21 ist in oder an einem Bremssattel 24 angeordnet. Der Bremssattel 24 ist als Schwimmsattel ausgebildet, er ist quer zur Bremsscheibe 23 verschieblich geführt. Wird der Reibbremsbelag 22 zur Bremsbetätigung gegen die Bremsscheibe 23 gedrückt, verschiebt sich der Bremssattel 24 quer zur Bremsscheibe 23 und drückt einen gegenüberliegend angeordneten zweiten Reibbremsbelag 25 gegen die andere Seite der Bremsscheibe 23, die dadurch gebremst wird.

Die Betätigungseinrichtung 21 weist einen Elektromotor 26 auf, der über ein mechanisches Untersetzungsgetriebe 27 einen Gewindetrieb 28 antreibt. Der Gewindetrieb 28 weist eine Mutter 29 auf, die vom Untersetzungsgetriebe 27 drehend angetrieben wird und die eine Spindel 30 verschiebt. Die Spindel 30 drückt den Reibbremsbelag 22 gegen die Bremsscheibe 23. Der Gewindetrieb 28 bildet ein Rotations-/Translations-Umsetzungsgetriebe. Das Untersetzungsgetriebe 27 ist im dargestellten Ausführungsbeispiel ein zweistufiges Zahnradgetriebe.

Am Reibbremsbelag 22 greifen Rückstellfedern 32 an, die am Bremssattel 24 befestigt sind und die den Reibbremsbelag bei nicht betätigter Bremse 20 von der Bremsscheibe 23 abheben. Außerdem spannen die Rückstellfedern die Betätigungseinrichtung 21 vor, die dadurch spielfrei ist.

Eine Motorwelle 31 des Elektromotors 26 ist mit einem Ritzel versehen, das das in Figur 1 dargestellte Zahnrad 13 des Freilaufs 1 bildet, der in Figur 2 als Symbol dargestellt ist. Das Ritzel 13 des Elektromotors 26 treibt das Untersetzungsgetriebe 27 der Betätigungseinrichtung 21 an.

Der Freilauf 1 wirkt auf das Ritzel 13 des Elektromotors 26. Die Freilaufrichtung des Freilaufs 1 entspricht einer Zuspannrichtung der Bremse 20, die Sperrrichtung des Freilaufs 1 entspricht demzufolge einer Löserichtung der Bremse 20. In eingeschaltetem Zustand sperrt der Freilauf 1 die Bremse 20 gegen Lösen, ein Zuspannen der Bremse 20 ist bei eingeschaltetem Freilauf 1 möglich. Bei ausgeschaltetem Freilauf 1 ist das Ritzel 13 des Elektromotors 26 in beiden Drehrichtungen drehbar, d. h. die Bremse 20 ist betätig- und lösbar.

Zum Feststellen wird die Bremse 20 betätigt, d. h. zugespannt, und der Freilauf 1 wird bei zugespannter Bremse 20 oder während des Zuspannens eingeschaltet. Der eingeschaltete Freilauf 1 sperrt die Bremse 20 gegen Lösen, die aufgebrachte Bremskraft wird auch bei unbestromtem Elektromotor 26 aufrecht erhalten. Wie oben zu Figur 1 erläutert, bleibt der Zahn 11 des Sperrelements 10 des Freilaufs 1 in Eingriff mit den Zähnen 16 des Zahnrads bzw. Ritzels 13, auch wenn der Elektromagnet 3 abgeschaltet ist. Die festgestellte Bremse 20 bleibt deswegen auch bei abgeschaltetem Elektromagnet 5 des Freilaufs 1 zugespannt.

Zum Ausschalten des Freilaufs 1 muss bei unbestromtem Elektromagneten 3 des Freilaufs 1 das Ritzel 13 des Elektromotors 26 durch Bestromen des Elektromotors 26 ein kurzes Stück in Zuspannrichtung der Bremse 20, also in Freilaufrichtung des Freilaufs 1, gedreht werden. Die Zähne 16 des Ritzels/Zahnrads 13 drücken den Zahn 11 des Sperrelements 10 des Freilaufs 1 außer Eingriff, wodurch der Freilauf 1 ausgeschaltet wird. Nach Ausschalten des Freilaufs 1 lässt sich die Bremse 20 lösen.

Der Freilauf 1 greift am Ritzel 13 des Elektromotors 26 an, weil dort das Drehmoment am geringsten ist. Außerdem ist die Drehung des Ritzels 13 bei Betätigung und Lösen der Bremse 20 am größten, so dass sich durch den Eingriff des Freilaufs 1 am Ritzel 13 des Elektromotors 26 die Bremse 20 feinstufig feststellen lässt. Der Freilauf 1 lässt sich durch seine kompakte, axial kurzbauende Bauweise platzsparend beim Ritzel 13 in der Bremse 20 unterbringen.

Die Einstellung eines Lüftspiels, d. h. eines Spalts zwischen den Reibbremsbelägen 22, 25 und der Bremsscheibe 23, wird erfindungsgemäß durch Einschalten des Freilaufs 1 beim Lösen der Bremse 20 eingestellt. Der Freilauf 1 wird eingeschaltet, wenn beim Lösen der Bremse 20 ein gewünschtes Lüftspiel erreicht ist. Der Freilauf 1 kann nach einem vorgebbaren Drehwinkel des Ritzels 13 ab einem Abheben der Reibbremsbeläge 22, 25 von der Bremsscheibe 23 eingeschaltet werden, um das gewünschte Lüftspiel einzustellen. Der Drehwinkel des Ritzels 13 kann auch mehr als eine volle Umdrehung betragen. Durch die erfindungsgemäße Lüftspieleinstellung wird ein Verschleiß der Reibbremsbeläge 22, 25 und der Bremsscheibe 23 ausgeglichen, das Lüftspiel wird unabhängig von einem Verschleißzustand der Reibbremsbeläge 22, 25 immer konstant eingestellt.

Die Rückstellfedern 32, die den Reibbremsbelag 22 von der Bremsscheibe 23 abheben und die Betätigungseinrichtung 21 vorspannen, beaufschlagen den eingeschalteten Freilauf 1 über den Gewindetrieb 28 und das Untersetzungsgetriebe 27 der Betätigungseinrichtung 21 in die eingeschaltete Stellung. Der Freilauf 1 wird dadurch bei unbestromtem Elektromagneten 3 gegen die Kraft seines Rückstellfederelements 17 in der eingeschalteten Stellung gehalten und sperrt die Bremse 20 gegen eine Weiterbewegung in der Löserichtung.

Durch die erfindungsgemäß formschlüssige Ausbildung des Freilaufs 1 wird ein unbeabsichtigtes Lösen des eingeschalteten Freilaufs 1 zuverlässig vermieden, auch wenn der Freilauf 1 Erschütterungen und Vibrationen während einer Fahrt ausgesetzt ist. Durch den ausgewuchteten Anker 7 des Freilaufs 1 wird vermieden, dass durch Beschleunigungen des Freilaufs 1 ein Moment auf den Anker 7 einwirkt, das das Sperrelement 10 außer Eingriff vom Zahnrad/Ritzel 13 bringen könnte. Stoßartige Beschleunigungen, beispielsweise beim Überfahren eines Randsteins, können mit bis zu etwa 60 - 80 g, also dem 60-80fachen der Erdbeschleunigung auf den Freilauf 1 einwirken.

## Patentansprüche

1. Elektromechanisch schaltbarer, formschlüssiger Freilauf, mit einem Elektromagneten (3) zum Schalten des Freilaufs (1), und mit einem Sperrelement (10, 11), das zum Einschalten des Freilaufs (1) mit dem Elektromagneten (3) in Eingriff mit einem Zahnrad (13) bringbar ist und das Zahnrad (13) gegen Drehung in einer Sperrrichtung sperrt und eine Drehung des Zahnrads (13) in einer der Sperrrichtung entgegengesetzten Freilaufrichtung zulässt, **dadurch gekennzeichnet, dass** der Freilauf (1) einen Anker (7) aufweist, der vergleichbar einem Rotor eines Elektromotors ausgebildet ist, dessen Schwenkwinkel begrenzt ist und der das Sperrelement (10, 11) aufweist, dass der Elektromagnet (3) ein Joch (4) nach Art eines Stators eines Elektromotors aufweist, das den Anker (7) umgreift, und dass der Elektromagnet (3), wenn er bestromt wird, ein Moment auf den Anker (7) ausübt, das das Sperrelement (10, 11) in Eingriff mit oder außer Eingriff von dem Zahnrad (13) bringt.

2. Elektromechanisch schaltbarer, formschlüssiger Freilauf nach Anspruch 1, **dadurch gekennzeichnet, dass** der Anker (7) mit dem Sperrelement (10, 11) ausgewuchtet ist.

3. Elektromechanisch schaltbarer, formschlüssiger Freilauf nach Anspruch 1, **dadurch gekennzeichnet, dass** der Freilauf (1) monostabil ist und ein Federelement (17) aufweist, das das Sperrelement (10, 11) außer Eingriff von oder in Eingriff mit dem Zahnrad (13) bewegt.

4. Elektromechanisch schaltbarer, formschlüssiger Freilauf nach Anspruch 3, **dadurch gekennzeichnet, dass** der Freilauf (1) durch Bestromen seines Elektromagneten (3) gegen die Kraft des Federelements (17) eingeschaltet wird.

5. Elektromechanisch schaltbarer, formschlüssiger Freilauf nach Anspruch 1, **dadurch gekennzeichnet, dass** das Sperrelement (10) einen Zahn (11) nach Art eines Zahns eines Zahnrads aufweist.

6. Elektromechanisch schaltbarer, formschlüssiger Freilauf nach Anspruch 5, **dadurch gekennzeichnet, dass** der Zahn (11) des Sperrelements (10) und die Zähne (16) des Zahnrads (13) wälzende Zahnflankenformen aufweisen.

7. Elektromechanisch schaltbarer, formschlüssiger Freilauf nach Anspruch 1, **dadurch gekennzeichnet, dass** das Zahnrad (13) symmetrische Zahnflanken aufweist.

8. Elektromechanische Bremse für ein Kraftfahrzeug, mit einer elektromechanischen Betätigungseinheit (21) und mit einem Reibbremsbelag (22), der zum Bremsen mit der elektromechanischen Betätigungseinheit (21) gegen einen zu bremsenden Bremskörper (23) drückbar ist, wobei die Bremse (20) einen elektromechanischen, schaltbaren, formschlüssigen Freilauf (1) mit einem Elektromagneten (3) zum Schalten des Freilaufs (1) und mit einem Sperrelement (10, 11), das zum Einschalten des Freilaufs (1) mit dem Elektromagneten (3) in Eingriff mit einem Zahnrad (13) der elektromechanischen Betätigungseinrichtung (21) der Bremse (20) bringbar ist und das Zahnrad (13) gegen Drehung in einer Sperrrichtung sperrt und eine Drehung des Zahnrads (13) in einer der Sperrrichtung entgegengesetzten Freilaufrichtung zulässt, wobei die Sperrrichtung einer Löserichtung der Bremse (20) und die Freilaufrichtung einer Zuspannrichtung der Bremse (20) entspricht, aufweist, **dadurch gekennzeichnet, dass** der Freilauf (1) einen Anker (7) aufweist, der vergleichbar einem Rotor eines Elektromotors ausgebildet ist, dessen Schwenkwinkel begrenzt ist und der das Sperrelement (10, 11) aufweist, dass der Elektromagnet (3) ein Joch (4) nach Art eines Stators eines Elektromotors aufweist, das den Anker (7) umgreift, und dass der Elektromagnet (3), wenn er bestromt wird, ein Moment auf den Anker (7) ausübt, das das Sperrelement (10, 11) in Eingriff mit oder außer Eingriff von dem Zahnrad (13) bringt.

9. Elektromechanische Bremse nach Anspruch 8, **dadurch gekennzeichnet, dass** das Zahnrad (13), mit dem das Sperrelement (10, 11) des Freilaufs (1) in Eingriff bringbar ist, ein Zahnrad der elektromechanischen Betätigungseinheit (21) der Bremse (20) ist.

10. Verfahren zur Lüftspieleinstellung einer elektromechanischen Bremse, die eine elektromechanische Betätigungseinheit (21) und einen Reibbremsbelag (22), der zum Bremsen mit der elektromechanischen Betätigungseinheit (21) gegen einen zu bremsenden Bremskörper (23) drückbar ist, und einen elektromechanisch schaltbaren, formschlüssigen Freilauf (1) nach einem der Ansprüche 1-7 aufweist, der in eingeschaltetem Zustand die elektromechanische Betätigungseinheit (21) der Bremse (20) gegen ein Lösen der Bremse (20) sperrt, wobei der Freilauf (1) beim Lösen der Bremse (20) eingeschaltet wird, wenn das gewünschte Lüftspiel erreicht ist.

## Claims

1. Electromechanically switchable, interlocking freewheel having a solenoid (3) for switching the freewheel (1), and having a blocking element (10, 11) which can be made to engage with a gear wheel (13) in order to activate the freewheel (1) using the solenoid (3), and which blocks the gear wheel (13) against rotation in a blocking direction, and which permits a rotation of the gear wheel (13) in a freewheel direction which opposes the blocking direction, **characterized in that** the freewheel (1) has an armature (7) which, in terms of design, is comparable to a rotor of an electric motor and of which the pivot angle is limited and which has the blocking element (10, 11), **in that** the solenoid (3) has a yoke (4) in the form of a stator of an electric motor, which yoke engages around the armature (7), and **in that** the solenoid (3), when supplied with power, exerts a torque on the armature (7) which makes the blocking element (10, 11) engage with or disengage from the gear wheel (13).

2. Electromechanically switchable, interlocking freewheel according to Claim 1, **characterized in that** the armature (7) is balanced by the blocking element (10, 11).

3. Electromechanically switchable, interlocking freewheel according to Claim 1, **characterized in that** the freewheel (1) is monostable and has a spring element (17) which moves the blocking element (10, 11) out of engagement from or into engagement with the gear wheel (13).

4. Electromechanically switchable, interlocking freewheel according to Claim 3, **characterized in that** the freewheel (1) is activated against the force of the spring element (17) by supplying power to its solenoid (3).

5. Electromechanically switchable, interlocking freewheel according to Claim 1, **characterized in that** the blocking element (10) has a tooth (11) in the form of a tooth of a gear wheel.

6. Electromechanically switchable, interlocking freewheel according to Claim 5, **characterized in that** the tooth (11) of the blocking element (10) and the teeth (16) of the gear wheel (13) have rolling tooth flank shapes.

7. Electromechanically switchable, interlocking freewheel according to Claim 1, **characterized in that** the gear wheel (13) has symmetrical tooth flanks.

8. Electromechanical brake for a motor vehicle, having an electromechanical operating unit (21) and having a friction brake lining (22) which can be pressed against a brake body (23) to be braked in order to perform braking using the electromechanical operating unit (21), with the brake (20) having an electromechanical, switchable, interlocking freewheel (1) having a solenoid (3) for switching the freewheel (1), and having a blocking element (10, 11) which can be made to engage with a gear wheel (13) of the electromechanical operating unit (21) of the brake (20) in order to activate the freewheel (1) using the solenoid (3), and which blocks the gear wheel (13) against rotation in a blocking direction, and which permits a rotation of the gear wheel (13) in a freewheel direction which opposes the blocking direction, with the blocking direction corresponding to a release direction of the brake (20) and the freewheel direction corresponding to an application direction of the brake (2), **characterized in that** the freewheel (1) has an armature (7) which, in terms of design, is comparable to a rotor of an electric motor and of which the pivot angle is limited and which has the blocking element (10, 11), **in that** the solenoid (3) has a yoke (4) in the form of a stator of an electric motor, which yoke engages around the armature (7), and **in that** the solenoid (3), when supplied with power, exerts a torque on the armature (7) which makes the blocking element (10, 11) engage with or disengage from the gear wheel (13).

9. Electromechanical brake according to Claim 8, **characterized in that** the gear wheel (13), with which the blocking element (10, 11) of the freewheel (1) can be made to engage, is a gear wheel of the electromechanical operating unit (21) of the brake (20).

10. Method for adjusting the air play of an electromechanical brake which has an electromechanical operating unit (21) and a friction brake lining (22), which can be pressed against a brake body (23) to be braked in order to perform braking using the electromechanical operating unit (21), and an electromechanically switchable, interlocking freewheel (1) according to one of Claims 1-7 which, in the activated state, blocks the electromechanical operating unit (21) of the brake (20) against releasing the brake (20), with the freewheel (1) being activated during release of the brake (20) when the desired air play is reached.

## Revendications

1. Roue libre à complémentarité de forme, à commande électromécanique, comprenant un électroaimant (3) pour commander la roue libre (1), et un élément de blocage (10, 11), qui peut être amené en prise avec une roue dentée (13) en vue d'enclencher la roue libre (1) avec l'électroaimant (3), et qui bloque la roue dentée (13) pour l'empêcher de tourner dans une direction de blocage et qui permet une rotation de la roue dentée (13) dans une direction de roue libre opposée à la direction de blocage, **caractérisée en ce que** la roue libre (1) présente une armature (7), qui est réalisée de manière comparable à un rotor d'un moteur électrique, dont l'angle de pivotement est limité et qui présente l'élément de blocage (10, 11), **en ce que** l'électroaimant (3) présente une culasse (4) à la manière d'un stator d'un moteur électrique, qui entoure l'armature (7), et **en ce que** l'électroaimant (3), lorsqu'il est parcouru par un courant, exerce un couple sur l'armature (7), qui amène l'élément de blocage (10, 11) en prise ou hors d'engagement avec la roue dentée (13).

2. Roue libre à complémentarité de forme, à commande électromécanique, selon la revendication 1, **caractérisée en ce que** l'armature (7) avec l'élément de blocage (10, 11) est équilibrée.

3. Roue libre à complémentarité de forme, à commande électromécanique, selon la revendication 1, **caractérisée en ce que** la roue libre (1) est monostable et présente un élément de ressort (17), qui déplace l'élément de blocage (10, 11) hors d'engagement ou en prise avec la roue dentée (13).

4. Roue libre à complémentarité de forme, à commande électromécanique, selon la revendication 3, **caractérisée en ce que** la roue libre (1) est enclenchée en faisant circuler un courant à travers son électroaimant (3) à l'encontre de la force de l'élément de ressort (17).

5. Roue libre à complémentarité de forme, à commande électromécanique, selon la revendication 1, **caractérisée en ce que** l'élément de blocage (10) présente une dent (11) à la manière d'une dent de roue dentée.

6. Roue libre à complémentarité de forme, à commande électromécanique, selon la revendication 5, **caractérisée en ce que** la dent (11) de l'élément de blocage (10) et les dents (16) de la roue dentée (13) présentent des formes roulantes de flancs de dents.

7. Roue libre à complémentarité de forme, à commande électromécanique, selon la revendication 1, **caractérisée en ce que** la roue dentée (13) présente des flancs de dents symétriques.

8. Frein électromécanique pour un véhicule automobile, comprenant une unité de commande électromécanique (21) et une garniture de frein de friction (22), qui peut être pressée contre un corps de frein à freiner (23) en vue du freinage avec l'unité de commande électromécanique (21), le frein (20) présentant une roue libre (1) à complémentarité de forme, à commande électromécanique, avec un électroaimant (3) pour commander la roue libre (1) et avec un élément de blocage (10, 11) qui peut être amené en prise avec une roue dentée (13) du dispositif de commande électromécanique (21) du frein (20) en vue d'enclencher la roue libre (1) avec l'électroaimant (3) et qui bloque la roue dentée (13) pour l'empêcher de tourner dans une direction de blocage et qui permet une rotation de la roue dentée (13) dans une direction de roue libre opposée à la direction de blocage, la direction de blocage correspondant à une direction de desserrage du frein (20) et la direction de roue libre correspondant à une direction de serrage du frein (20), **caractérisé en ce que** la roue libre (1) présente une armature (7), qui est réalisée de manière comparable à un rotor d'un moteur électrique, dont l'angle de pivotement est limité et qui présente l'élément de blocage (10, 11), **en ce que** l'électroaimant (3) présente une culasse (4) à la manière d'un stator d'un moteur électrique, qui entoure l'armature (7), et **en ce que** l'électroaimant (3), lorsqu'il est parcouru par un courant, exerce un couple sur l'armature (7), qui amène l'élément de blocage (10, 11) en prise ou hors d'engagement avec la roue dentée (13).

9. Frein électromécanique selon la revendication 8, **caractérisé en ce que** la roue dentée (13), avec laquelle l'élément de blocage (10, 11) de la roue libre (1) peut être amené en prise, est une roue dentée de l'unité de commande électromécanique (21) du frein (20).

10. Procédé pour l'ajustement du jeu d'un frein électromécanique, qui présente une unité de commande électromécanique (21) et une garniture de frein de friction (22) qui peut être pressée contre un corps de frein à freiner (23) en vue du freinage avec l'unité de commande électromécanique (21) et une roue libre (1) selon l'une quelconque des revendications 1 à 7, à complémentarité de forme et à commande électromécanique, qui, dans un état enclenché, bloque l'unité de commande électromécanique (21) du frein (20) pour empêcher un desserrage du frein (20), la roue libre (1) étant enclenchée lors du desserrage du frein (20), quand le jeu souhaité est atteint.
